# EUROPÄISCHE PATENTSCHRIFT

(11) **EP 1 035 936 B1**
(45) Veröffentlichungstag und Bekanntmachung des Hinweises auf die Patenterteilung: **05.03.2003**
(21) Anmeldenummer: 99955676.4
(22) Anmeldetag: 08.09.1999
(51) Int. Cl.: B23D 31/00

(54) **Vorrichtung und Verfahren zum Bruchtrennen von Werkstücken**
Apparatus and method for cracking of workpieces
Appareil et procédé pour le cracking de pièces

(30) Priorität: 08.09.1998 DE 19841027
(43) Veröffentlichungstag der Anmeldung: 20.09.2000
(73) Patentinhaber: Mauser-Werke Oberndorf Maschinenbau GmbH, 78727 Oberndorf (DE)
(72) Erfinder: GRUHLER, Siegfried, D-72189 Vöhringen (DE); KLEIN, Joachim, D-78727 Oberndorf (DE); DITTMANN, Klaus, D-72175 Dornhan (DE); SCHWARZWÄLDER, Gerold, D-78661 Dietingen (DE); KNEIDL, Horst-Josef, D-78727 Oberndorf (DE); RÖMPP, Wolfgang, D-72175 Dornhan (DE); KUTZ, Helmut, D-72175 Dornhan (DE)
(74) Vertreter: Winter, Brandl, Fürniss, Hübner, Röss, Kaiser, Polte Partnerschaft
(86) Internationale Anmeldenummer: DE9902842
(87) Internationale Veröffentlichungsnummer: WO00013833

(56) Entgegenhaltungen:
- EP-A- 0 568 119
- DE-U- 29 519 126

## Beschreibung

Die Erfindung betrifft ein Verfahren zum Bruchtrennen von Werkstücken gemäß dem Oberbegriff des Patentanspruchs 1 und eine Bearbeitungseinheit, insbesondere zur Durchführung dieses Verfahrens, nach dem Oberbegriff des Patentanspruchs 4.

Das Bruchtrennen wird zur Ausbildung von teilbaren Lagerstellen, beispielsweise von Pleueln oder Kurbelgehäusen eingesetzt. Bei der Pleuelfertigung wird zunächst ein Pleuelrohling mit einem kolbenseitigen Pleuelauge, einer Pleuelstange und einem kurbelwellenseitigen Lagerabschnitt (großes Lagerauge) hergestellt. In der Innenumfangsfläche des Lagerabschnittes werden dann zwei diametral angeordnete Kerben ausgebildet, die eine Bruchebene vorgeben, entlang der das Pleuel bruchgetrennt wird, so daß der Lagerabschnitt in einen Lagerdeckel und ein Lagerbett geteilt wird. Dabei kann sowohl der Deckel als auch die Pleuelstange abgesprengt werden.

Durch den Bruchtrennvorgang entsteht eine Mikro- und Makroverzahnung, die ein passgenaues Zusammenfügen des Lagerdeckels mit dem Lagerbett nach einer Feinbearbeitung des sogenannten großen Auges des Lagerabschnittes ermöglicht.

Bisher wurden im wesentlichen zwei Verfahrensweisen zum Einbringen der Kerben verwendet. Bei dem klassischen Verfahren werden die Kerben durch einen Räumvorgang ausgebildet, wobei die Kerben - bedingt durch die Form des Räumwerkzeuges - verhältnismäßig große Kerbweiten aufweisen.

In den letzten Jahren wird das Räumverfahren durch das sogenannte "Laserkerben" verdrängt, das beispielsweise in der DE 19534360A1, die den nächstkommenden Stand der Technik offenbart, und der US 5,208,979A beschrieben ist. Bei diesem Verfahren werden die Kerben mittels Laserstrahl eingebracht, so daß die Ausbildung der Kerben gegenüber der herkömmlichen Lösung wesentlich vereinfacht ist, da praktisch kein Werkzeugverschleiß und keine Kühl-/Schmiermittel zu berücksichtigen sind.

Nach dem Einbringen der Kerben, dem Bruchtrennen und dem Ausblasen von Bruchstücken werden die Pleuelteile in einer Schraubstation zusammengeschraubt, wobei der Schraubvorgang derart gesteuert ist, daß bei der Endmontage des Pleues die Setzung im Trennebenenbereich unterhalb eines Grenzwertes liegt.

Beim Schrauben wird mit einem kontrollierten Eindrehen der Schrauben begonnen, wobei die Schraubtiefe geprüft und eine Schwergängigkeit bzw. Gewinde vorhanden/nicht vorhanden erkannt wird.

Sobald die Schrauben anliegen, erfolgt der Fügevorgang, wobei durch die ebene Auflage der Stirnflächen eingeengtes Schraubenspiel oder Führung durch ein Führungsteil im großen Auge zur Findung der richtigen Fügestellung vorzentriert wird.

Nachfolgend wird winkel- und momentkontrolliert gefügt, danach wird pleuel- bzw. schraubspezifisch drehmoment-, winkel- oder streckgrenzgesteuert angezogen.

Das heißt, beim Schraubvorgang muß das Anzugsmoment der Schrauben so gewählt werden, daß zu Beginn der Verschraubung ein Fügen erfolgt, bei dem die Mikro- und Makroverzahnungen in die richtige Relativposition zueinander gebracht werden, anschließend wird durch Erhöhen des Anzugsmomentes die Spannung in der Bruchebene derart erhöht, daß sie im Bereich der Streckgrenze des Materials liegt, so daß ein Setzen stattfindet. Anschließend wird die Verschraubung wiederum gelöst, eventuell gebildete Bruchstücke ausgeblasen und die Verschraubung mit einem vom Hersteller vorgeschriebenen Drehmoment wieder hergestellt.

Bei den herkömmlichen Crackeinheiten wird das Pleuel nach dem Bruchtrennen zu einer Blasstation und von dort zu einer Schraubstation transportiert, in denen die vorschriebenen Bearbeitungsschritte nacheinander durchgeführt werden.

Nachteilig bei dieser bekannten Lösung ist, daß die Ausbildung von Einzelstationen einen erheblichen vorrichtungstechnischen Aufwand in sich birgt, da die Stationen über geeignete Transporteinheiten miteinander verbunden werden müssen. Besonders schwierig ist es dabei, während des Transportes die Relativposition der Pleuelteile zueinander aufrecht zu erhalten, so daß der Füge-Setzschritt möglichst einfach durchführbar ist.

Demgegenüber liegt der Erfindung die Aufgabe zugrunde, ein Verfahren und eine Bearbeitungseinheit zu schaffen, bei denen das Bruchtrennen und Fügen der Werkstückteile mit minimalem vorrichtungstechnischen Aufwand durchführbar ist.

Diese Aufgabe wird hinsichtlich des Verfahrens durch die Merkmale des Patentanspruchs 1 und hinsichtlich der Bearbeitungseinheit durch die Merkmale des nebengeordneten Patentanspruchs 4 gelöst.

Erfindungsgemäß erfolgen die Schritte Bruchtrennen, Ausblasen und Verschrauben (Fügen, Setzen) in einer einzigen Station, in der das Pleuel in einer Bezugsposition festgespannt ist. Mit dieser Maßnahme entfällt der Transport zwischen den einzelnen Stationen, so daß der Füge-/Setzvorgang mit einer erheblich besseren Positioniergenauigkeit durchgeführt werden kann, da die Beschädigung der Bruchflächen gegenüber herkömmlichen Lösungen verringert wird.

Der vorrichtungstechnische Aufwand läßt sich weiter verringern, wenn der Spreizdorn während des Ausblas- und Verschraubvorganges zur Lagefixierung verwendet wird.

Eine besonders hohe Fügequalität mit verringerten Taktzeiten erhält man, wenn der Blasvorgang bereits während des Bruchtrennens durchgeführt wird, so daß die Bruchstücke unverzüglich aus dem Trennebenenbereich herausgeblasen werden.

Falls der Spreizdorn zur Lagefixierung verwendet wird ist es besonders vorteilhaft, wenn dieser derart angesteuert wird, daß er während der Verschraubung eine gewisse Gegenkraft auf das Werkstück aufbringt, so daß die Lagerteile (Lagerbett, Lagerdeckel) während der Verschraubung durch den Spreizdorn geführt sind. Das heißt, bei dieser Variante kann der wirksame Durchmesser des Spreizdorns gesteuert in Radialrichtung vergrößert und verkleinert werden.

Die Düse oder die Düsen der Ausblaseinrichtung können dabei in einer Spreizbacke des Spreizdorns oder in dem Spreizkeil münden, der zur Auseinanderbewegung der Spreizbacken in Axialrichtung eingetrieben wird.

Besonders vorteilhaft wirkt sich aus, wenn die Düsen der Blaseinrichtung zum Ausblasen der Bruchteile in dem Spreizkeil münden, so daß die Eintauch- bzw. Rückzugbewegung des Spreizkeiles benutzt werden kann, um die Bruchebene über einen möglichst großen Bereich mit bewegter Düse auszublasen.

Die Anpassung an unterschiedliche Bauteilgeometrien ist besonders vereinfacht, wenn die Mittelebene .des zu crackenden Lagerabschnittes stets in eine Relativposition zu einer festen Bezugsebene der Crackstation gebracht wird, die durch die Wirkebene der Schraubeinheit, der Blaseinrichtung und die Wirkmitte des Spreizdornes definiert ist. Dadurch ist gewährleistet, daß die Werkstückmitte stets in demjenigen Höhenbereich des Spreizdornes angeordnet ist, in dem die optimale Spreizwirkung herbeiführbar ist. Des weiteren ist bei einer derartigen Definition der Nullpunktslage eine Höhenjustierung der Schraubeinheit und der Blaseinrichtung nicht erforderlich, so daß die Rüstzeiten minimal gehalten werden können.

Alternativ können die Schraubeinheit und beispielsweise ein Gegenhalter auch gemeinsam auf einer vertikalen Achse geführt werden, so daß durch Verfahren der Schraubeinheit eine Anpassung an unterschiedliche Werkstückhöhen möglich ist.

Da die Bruchfläche durch das Auge des Lagerabschnittes in zwei Teilbereiche aufgeteilt ist, erfolgt der Bruch nicht gleichzeitig über die ganze Bruchfläche, sondern die beiden Teilbereiche werden nacheinander gebrochen. Bei ungünstigen Fällen kann es vorkommen, daß nach dem Bruchtrennen des ersten Teilbereiches der verbliebene Teilbereich nicht sofort bricht, sondern zunächst einer Verformung unterzogen wird, die ein darauf folgendes Fügen mit der erforderlichen Genauigkeit praktisch ausschließt.

Um eine derartige übermäßige Deformation des zweiten Teilbereiche zu vermeiden wird bei einer vorteilhaften Ausführungsform der Erfindung die beiden Teilbereiche derart abgestützt, daß ein Bruch in beiden Teilbereichen herbeiführbar ist. Diese Abstützung kann als sogenannte "Stützwaage" ausgebildet sein, aber auch die Form einer "Stützbrücke" aufweisen.

Die Bearbeitungseinheit läßt sich besonders vielseitig einsetzen, wenn diese auch mit einer Lasereinheit zum Einbringen der Kerben versehen ist. Bei dieser Ausführungsform wird eine Transporteinheit vorgesehen, über die das Pleuel nach dem Einbringen der Kerbe zu dem Bereich transportierbar ist, in dem das Cracken, Ausblasen und Verschrauben stattfindet.

Durch das Vorsehen von zumindest zwei Stützwaagen und einem Schieber, der dazu dient, die Stützwaagen mit Kraft zu beaufschlagen, sind große Lagerdeckel oder mehrere Lagerdeckel gleichmäßig wegcrackbar.

Wenn Stifte der Stützwaage zum Schieber orthogonal verlaufen, kann mit geringem vorrichtungstechnischen Aufwand eine vorteilhafte Kraftübertragung erzielt werden.

Es ist bezüglich des vorrichtungstechnischen Aufwandes besonders günstig, wenn die Kraftübertragung zwischen Stützwaage und Schieber über Schrägflächen des Schiebers erfolgt, mit denen sich die Stützwaage in Anlage befinden kann. Genauer gesagt läßt sich mit einem Minimum an mechanischen Teilen eine gute Kraftübertragung erzielen

Die Stützwaage weist vorzugsweise zwei Stifte auf, die über ein Joch verbunden sind. Auf diese Weise sind auf zwei Seiten eines Lagerdeckels Kräfte mit gleicher Größe aufbringbar.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert.
Figur 1 zeigt eine schematische Seitenansicht einer erfindungsgemäßen Bearbeitungseinheit in Kompaktbauweise;
Figur 2 zeigt eine Detaildarstellung einer Crackstation der Bearbeitungseinheit aus Figur 1;
Figur 3 zeigt einen Querschnitt durch einen Spreizdorn der Crackstation aus Figur 2;
Figur 4 zeigt ein Ausführungsbeispiel, bei dem ein Lagerdeckel über eine Stützwaage abgestützt wird;
Figur 5 ein weiteres Ausführungsbeispiel einer Abstützung eines Lagerdeckels;
Figur 6 ein weiteres Ausführungsbeispiel einer Bearbeitungseinheit;
Figur 7 eine Rüsteinrichtung für die Bearbeitungseinheit
Figur 8 und 9 eine Schnittansicht bzw. eine Draufsicht von einem Ausführungsbeispiel bei dem mehrere Lagerdeckel über sieben Stützwaagen abgestützt werden.

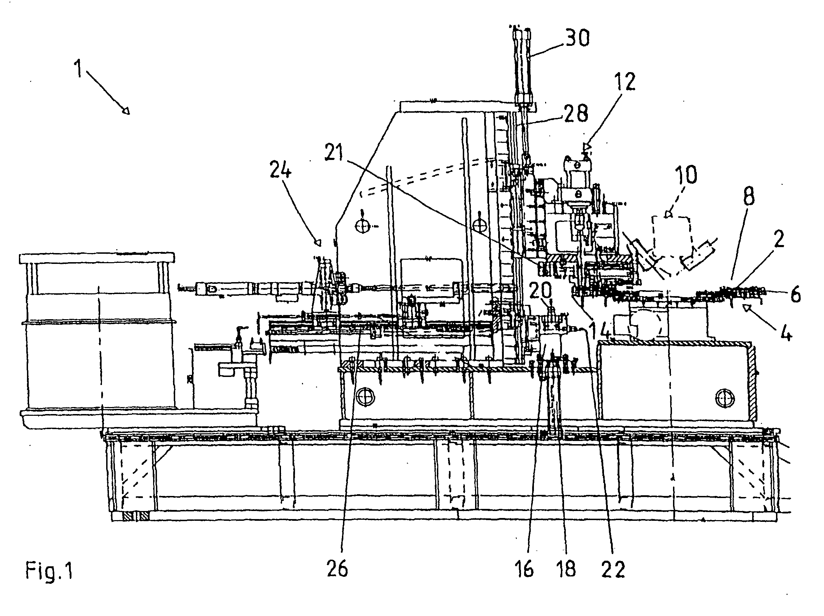

Figur 1 zeigt eine Seitenansicht eines Teils einer Kompakt-Bearbeitungseinheit 1, mit der Werkstücke, beispielsweise Pleuel 2 gecrackt werden sollen. Die Bearbeitungseinheit 1 hat eine Transporteinheit 4 mit Kassetten 6, auf denen die Pleuel 2 festgelegt sind. Über die Transporteinheit 4, die als Rundtisch ausgebildet ist, können die Pleuel 2 von einer lediglich angedeuteten Aufgabestation zu einer Lasereinheit 10 transportiert werden, die in Figur 1 strichpunktiert angedeutet ist. Die Lasereinheit 10 hat zwei Optiken, die um 90 Grad versetzt zueinander angeordnet sind, so daß die beiden diametral angeordneten Kerben gleichzeitig oder sequentiell in das große Auge des Pleuels 2 eingebracht werden können. Eine derartige Lasereinheit 10 ist beispielsweise in der eingangs genannten DE 19534360 A1 der Anmelderin beschrieben. Hinsichtlich weiterer Details der Lasereinheit sei der Einfachheit halber auf diese Vorveröffentlichung verwiesen.

Die erfindungsgemäße Bearbeitungseinheit 1 hat des weiteren eine Crackstation 12, in der mittels eines Spreizdorns 14 der Lagerabschnitt mit dem großen Auge des Pleuels 2 in eine Lagerschale und ein Lagerbett bruchgetrennt wird. Zur Lagefixierung des Pleuels 2 auf der Kassette 6 in Horizontalrichtung ist ein Gegenhalter 16 an der Bearbeitungseinheit 1 ausgebildet, der über einen Hydraulik- oder Pneumatikzylinder 18 in Vertikalrichtung (Ansicht nach Figur 1) ausfahrbar ist, so daß ein Führungszapfen 20 in eine Führungsausnehmung 21 der Crackeinheit 12 eintaucht und ein Horizontalanschlag 22 mit zwei sich senkrecht zur Zeichenebene in Figur 1 erstrekkenden Anlageabschnitten in Anlage an den Außenumfang des Lagerabschnittes des Pleuels 2 gebracht wird.

Nach der Durchführung des Bruchtrennvorganges wird der Lagerdeckel über zwei Spannschrauben mit dem Lagerbett (Pleuelstange, kleines Pleuelauge) verschraubt. Hierzu wird eine Schraubeinheit 24 verwendet, die mit einem Spannschraubenmagazin und drehmoment- oder winkelgesteuerten Schrauber versehen ist.

Eine derartige Schraubeinheit 24 wird bereits bei den eingangs beschriebenen herkömmlichen Lösungen eingesetzt, wobei der wesentliche Unterschied allerdings darin besteht, daß bei den herkömmlichen Systemen das gecrackte Pleuel 2 über die Transporteinheit zur Schraubeinheit 24 gefördert wird, während die Schraubeinheit 24 beim gezeigten Ausführungsbeispiel in derjenigen Bearbeitungsposition des Pleuels 2 in Wirkeingriff gelangt, die es beim Cracken eingenommen hatte. Das heißt, die Position des Pleuels 2 wird beim Cracken und beim Verschrauben nicht verändert. Um dies zu ermöglichen, ist die Schraubeinheit 24 auf einer Horizontalführung 26 geführt, so daß die Schraubköpfe 28 zu dem in der Crackeinheit 12 angeordneten Pleuel 2 verschiebbar ist.

Die gesamte Crackeinheit 12 ist an einer Vertikalführung 28 eines Ständers der Bearbeitungseinheit 1 geführt und kann mittels eines Betätigungszylinders 30 in Vertikalrichtung verschoben werden, so daß der Spreizdorn 14 in seine Crackposition in das große Auge des Pleuels 2 eintauchen kann.

Auf die Maschinensteuerung und die sonstigen Peripheriegeräte soll an dieser Stelle nicht eingegangen werden, da der gegenständliche Aufbau dieser Einrichtungen für das Verständnis der Erfindung von untergeordneter Bedeutung ist.

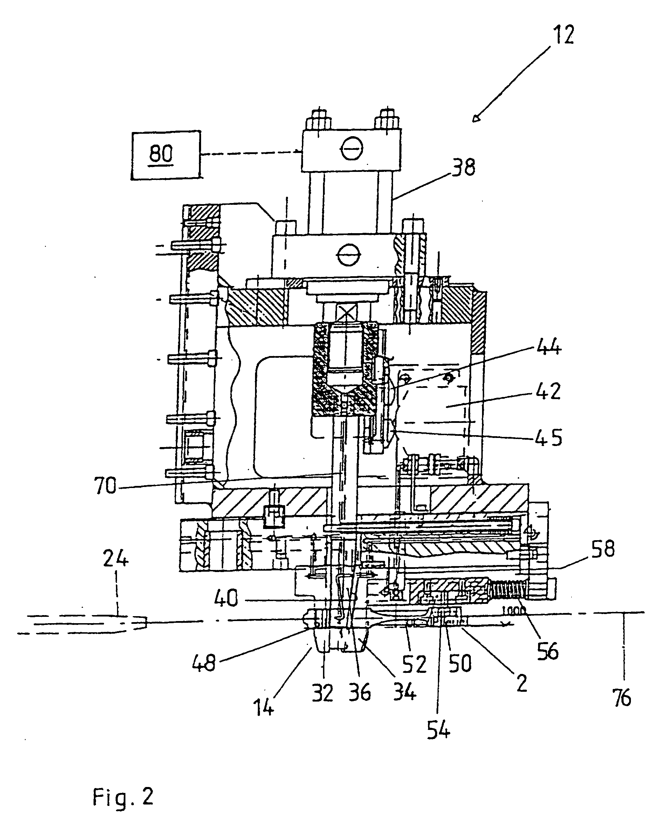

Figur 2 zeigt die Crackeinheit 12 aus Figur 1 in vergrößerter Darstellung. Demgemäß hat der Spreizdorn 14 einen feststehenden Spreizbacken 32 und eine gegenüber diesem in Radialrichtung bewegbar geführten beweglichen Spreizbacken 34. Zwischen den Spreizbacken 32, 34 befindet sich ein Spreizkeil 36, der mittels eines Spreizzylinders 38 in Vertikalrichtung (Ansicht nach Figur 2) bewegbar ist, so daß durch Auflaufen einer Keilfläche 40 auf eine entsprechend ausgeformte Gegenfläche der beweglichen Dornhälfte 34 letztere in der Darstellung nach Figur 2 nach rechts bewegbar ist, um den Crackvorgang einzuleiten. Der Hub des Spreizkeils 36 wird über einen Wegaufnehmer 42 (z. B. Schalter) erfaßt.

Wie aus Figur 2 entnehmbar ist, durchsetzt der Spreizdorn 14 in seiner Crackposition das große Auge 48 des Pleuels 2, das auf der nicht dargestellten Kassette 6 der Transporteinheit 4 aufliegt. Die Lagepositionierung des kleinen Auges 50 mit der Pleuelstange 52 erfolgt auch über einen Fixierzapfen 54, der in Horizontalrichtung (Ansicht nach Figur 2) verschiebbar an der Crackeinheit 12 gelagert ist. Der Fixierzapfen 54 wird über eine Druckfeder 56 in seine dargestellte Grundposition vorgespannt. Die federvorgespannte, horizontal verschiebbare Lage des Fixierzapfens 54 ermöglicht ein Ausweichen der Pleuelstange 52 mit dem kleinen Lagerauge 50 beim Bruchtrennen, so daß die Radialvergrößerung des Spreizdorns 14 nach erfolgtem Bruch ausgeglichen werden kann.

Bis hierhin unterscheidet sich die Crackeinheit 12 nur unwesentlich von den herkömmlichen Crackstationen, so daß es entbehrlich ist, auf weitere Details einzugehen.

Ein wesentlicher Unterschied zu den herkömmlichen Lösungen besteht darin, daß im Spreizdorn 14 Blasdüsen ausgebildet sind, die ein Ausblasen der Bruchstücke nach dem Crackvorgang ermöglichen.

Zur Ausbildung der Anordnung der Düse bestehen mehrere Möglichkeiten.

Eine Möglichkeit besteht darin, im vertikal bewegbaren Spreizkeil 36 ein entsprechendes Düsensystem aufzunehmen, über das Druckluft in den Spalt zwischen den beiden Dornhälften 32, 34 einblasbar ist. Alternativ oder ergänzend dazu kann das Düsensystem auch in einem der Spreizbacken 32, 34 ausgebildet werden, wobei es bevorzugt wird, zumindest einige Düsen in einem beweglichen Teil des Spreizdorns 14 (Spreizkeil 36, feststehende Spreizbacke 32) auszubilden, so daß die Düsen aufgrund der Vertikal- beziehungsweise Radialverschiebung des Spreizdorns 14 Ihre Relativposition zur Bruchfläche ändern, so daß das Herauslösen und Herausblasen von Bruchstücken vereinfacht wird.

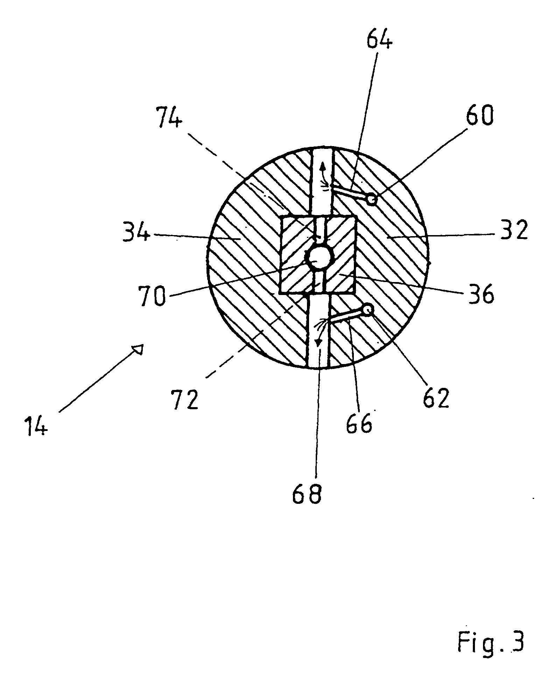

Figur 3 zeigt einen schematischen Schnitt durch einen Spreizdorn 14 mit den beiden Spreizbacken 34, 32, wobei in einem der Spreizbacken (beispielsweise dem feststehenden Spreizbacken 32) Druckluftbohrungen 60, 62 ausgebildet sind, von denen Düsenbohrungen 64, 66 abzweigen, die in dem Spalt 68 zwischen den beiden Dornhälften 32, 34 münden.

Eine Alternative oder Ergänzung besteht darin, wenn im.Spreizkeil 36 eine Druckluftbohrung 70 mit davon abzweigenden Düsenbohrungen 72, 74 ausgebildet ist. Der Vorteil dieser Variante besteht darin, daß die Düsenbohrungen in Radialrichtung zum Spalt 68 ausgerichtet sind und vertikal bewegt werden, so daß das Ausblasen der Bruchteile unterstützt wird.

Dieses Ausblasen wird bei der vorbeschriebenen Lösung dadurch unterstützt, daß die Düsenbohrungen 64, 66 zum Pleuel 2 hin angestellt sind. Selbstverständlich können die Düsen auch auf andere Art eingebracht werden, wesentlich ist, daß das Ausblasen bereits während des Crackens oder zumindest unmittelbar nach erfolgtem Cracken durchgeführt werden kann, wobei der Spreizdorn 14 noch in seiner Eintauchstellung im großen Auge 48 des Pleuels 2 verbleiben sollte.

Prinzipiell könnten jedoch auch externe Düsen eingesetzt werden, um.den Ausblasvorgang zu bewirken.

Eine weitere Besonderheit der Erfindung besteht darin, daß die Nulllage, das heißt die strichpunktiert angedeutete Linie 76 in Figur 2 die Mittelebene des Pleuels 2 und die Wirkebene der Schraubeinheit 24 schneidet. Des weiteren ist durch diese Nulllage 76 auch der mittlere Höhenbereich des Spreizdorns 14 definiert, so daß dieser in optimaler Weise ausnutzbar ist. Auch die vorbeschriebenen Düsen münden im Bereich der Nulllage, so daß eine Justierung der Schraubeinheit 24, des Spreizdorns 14 und der Düsen nicht erforderlich ist. Bei Änderung der Pleuelgeometrie muß lediglich die Auflagehöhe des Pleuels durch Änderung der Kassette 6 und die Lage und Abmessung des Führungszapfens 54 verändert werden, wobei dies durch vorgefertigte Wechselteile erfolgen kann, so daß die Rüstzeiten minimiert sind. Mit anderen Worten heißt dies, die Mittelebene des zu crackenden Werkstückes durchsetzt stets die strichpunktiert angedeutet Nulllage 76, deren Lage optimaler Weise an den Spreizdorn 14 sowie die Wirkebenen der Schraubeinheit 24 und der Düsen angepaßt ist.

Zum Spannen werden Tellerfedern verwendet, die zu den Rückholfedern abgestimmt sind. Es können aber auch schaltbare Zylinder anstelle dieser Federn verwendet werden.

Bei einem bevorzugten Ausführungsbeispiel wird der Spreizzylinder 38 über eine Steuerung 80 derart angesteuert, daß sowohl die Eintauchbewegung des Spreizkeils 36 als auch die Rückzugbewegung des Spreizkeils 36 in Abhängigkeit von Verarbeitungsparametern erfolgen kann. Diese Steuerung 80 ermöglicht es, den Spreizdorn 14 während des Schraubvorganges in Anlage an den Umfangswandungen des großen Auges 48 des Lagerabschnitts zu halten, so daß das Pleuel 2 auch beim eingangs beschriebenen Füge-/Setzvorganges präzise geführt ist und keine Beschädigungen durch Versatz der Pleuelteile auftreten können. In diesem Fall könnte als Parameter für die Steuerung der Spreizkeilbewegung beispielsweise das von der Schraubeinheit 24 aufgebrachte Drehmoment, der Drehwinkel der Spannschraube oder ähnliches verwendet werden. Die Funktion dieser Steuerung 80 wird im folgenden noch näher beschrieben.

Wie eingangs bereits erwähnt wurde, sind das erfindungsgemäße Verfahren und die erfindungsgemäße Bearbeitungseinheit keinesfalls auf die Anwendung bei Pleuel beschränkt, sondern diese sind auch bei anderen Werkstücken, beispielsweise bei Kurbelgehäusen einsetzbar.

Bei derartigen Werkstücken besteht oftmals ein Problem darin, daß mehrere Lagerstellen gleichzeitig oder hintereinander bruchgetrennt werden müssen. Dies erfordert eine sorgfältige Abstützung des Lagerdeckels, so daß ein einheitlicher Bruch und ein präziser Füge-/Setzvorgang herbeigeführt werden kann.

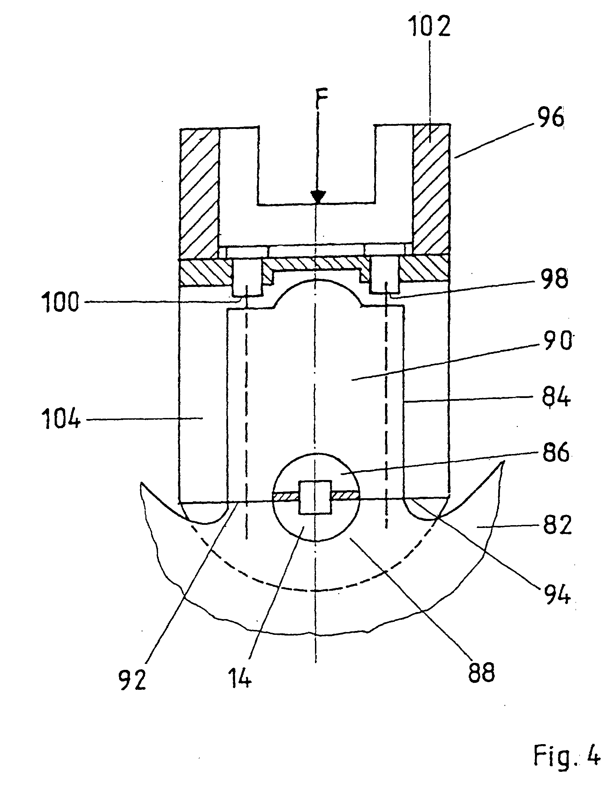

Figur 4 zeigt eine schematische Darstellung eines Kurbelgehäuses mit einem Lagerabschnitt 84, der im Bereich eines Lagerauges 86 in ein Lagerbett 88 und einen Lagerdeckel 90 bruchgetrennt werden soll. Zum Bruchtrennen wird wiederum ein Spreizdorn 14 verwendet.

Problematisch bei diesem Bruchvorgang ist, daß der Bruch niemals gleichzeitig in beiden, seitlich des Lagerauges 86 angeordneten Bruchflächenabschnitten 92, 94 erfolgt, sondern daß meist einer der Bruchflächenabschnitte 92, beziehungsweise 94 zuerst bricht und in der Folge erst der weitere Abschnitt getrennt wird. Problematisch hierbei ist, daß es bei ungünstigen Bedingungen (Material, Spreizkraft etc.) vorkommen kann, daß der zuletzt bruchgetrennte Bruchflächenabschnitt durch das Kippen des Lagerdeckels 90 verformt wird, so daß ein späteres Fügen nicht mit der erforderlichen Genauigkeit durchgeführt werden kann.

Um dies zu verhindern wird der Lagerdeckel 90 über eine Stützwaage 96 abgestützt, die zwei Auflageflächen 98, 100 hat, die in der Grundposition (Figur 1) in einem vorbestimmten Abstand zu den Anlageflächen des Lagerdeckels 90 angeordnet sind. Der mit den Auflageflächen 98, 100 versehene Stützkörper 102 wird mit einer vorbestimmten Kraft F in Richtung zum Lagerdeckel 90 beaufschlagt, wobei die in Figur 4 dargestellte Bezugsposition durch einen Anschlag festgelegt ist.

Beim Bruchtrennen beginnt der Bruch zunächst an einem Bruchflächenabschnitt 94 , so daß der Lagerdeckel 90 auf die Auflagefläche 98 aufläuft und dann mit der Kraft F abgestützt wird. Durch diese Abstützung wird verhindert, daß der zweite Bruchflächenabschnitt 92 einer übermäßigen Biegebeanspruchung über den Streckgrenzenbereich hinaus unterzogen wird, so daß die vorgenannten Verformungen nicht auftreten können. Nach dem Einleiten des Bruchs des Bruchflächenabschnittes 92 läuft der Lagerdeckel 90 auch auf die zweite Auflagefläche 100 auf, so daß der Lagerdeckel 90 beidseitig abgestützt ist, wobei über die Auflageflächen 98, 100 jeweils die Kraft F/2 übertragen wird. Dieses Abstützen erfolgt bei Einleiten des Bruches, so daß bei dem sich anschließenden vollständigen Durchbrechen eine exakte Führung des Lagerdeckels 90 mit Bezug zum Lagerbett 88 gewährleistet ist.

Zur Abstützung der Stützwaage 96 bestehen prinzipiell mehrere Möglichkeiten. Eine davon besteht darin, die Stützwaage 96 mit einer Stützmanschette 104 am Spreizdorn 14 abzustützen, der die Stützmanschette 104 durchsetzt.

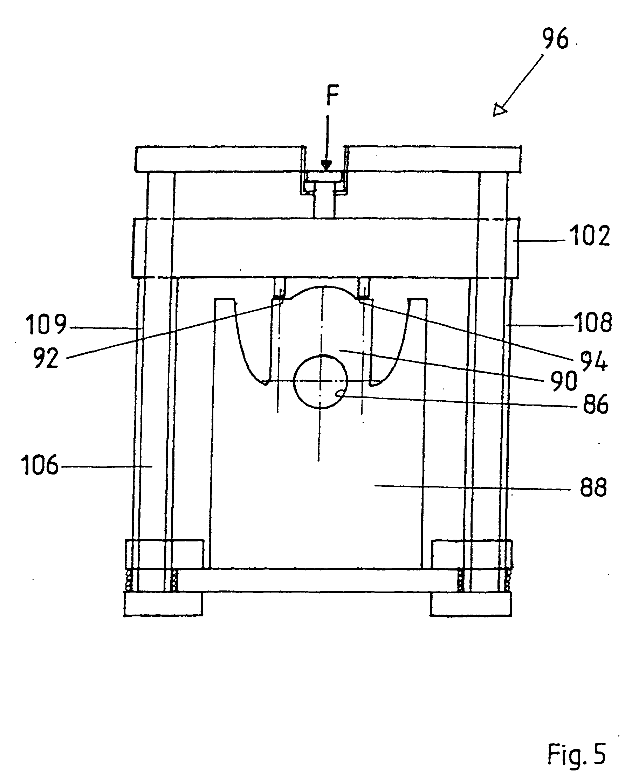

In Figur 5 ist schematisch ein weiteres Ausführungsbeispiel einer Stützwaage 96 dargestellt, bei der eine äußere Abstützung gewählt wurde. Hierbei ist der Stützkörper 102 in einem äußeren Führungsrahmen 106 geführt, der beispielsweise an der Transporteinheit oder der Auflage des Werkstückes festgelegt ist. Der Stützkörper 102 wird mit einer Kraft F beaufschlagt und liegt in der dargestellten Grundposition auf Anschlagkörper 108, 109 auf, so daß die Anschlagflächen 92, 94 in dem vorgeschriebenen Abstand zu der Lagerschale 90 angeordnet sind. Die Funktion ist prinzipiell die gleiche wie bei dem in Figur 4 dargestellten Ausführungsbeispiel einer Stützwaage.

In den vorstehend genannten Ausführungsbeispielen wurde davon ausgegangen, daß sich der Lagerdeckel oberhalb des Lagerbetts befindet. Der Lagerdeckel kann jedoch bei den vorstehend genannten Ausführungsbeispielen bei hängender Aufspannung in gleicher Weise auch unterhalb des Lagerbetts angeordnet sein.

Nachfolgend wird eine Abstützung von Lagerdeckel, die sich unterhalb des Lagerbetts befinden, für den Fall beschrieben, daß zumindest zwei Stützwaagen notwendig sind. Dieses kann daraus ergeben werden, daß ein Lagerdeckel verwendet wird, der eine große zu crackende Verbindungsfläche mit dem Lagerbett hat, oder daß mehrere Lagerdeckel verwendet werden.

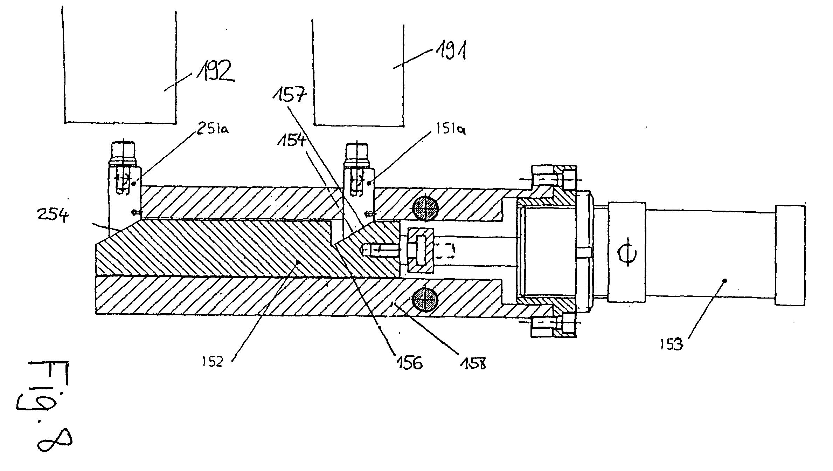

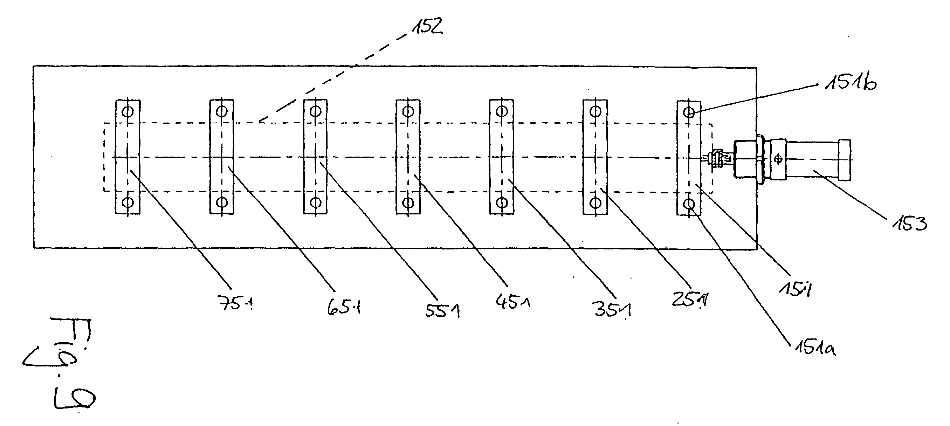

In den Fig. 8 und 9 ist der Fall gezeigt, daß sieben Stützwaagen Verwendung finden, die jeweils einem Lagerdeckel zugeordnet sind. Die Wirkungsweise der Erfindung ist jedoch bei Lagerdeckelabstützeinrichtungen, die zumindest zwei Stützwaagen haben, die gleiche.

Wie es in Fig. 8 gezeigt ist, ist ein Schieber 152 gleitfähig in einem Gehäuse 158 geführt. Der Schieber 152 ist über einen Linearantrieb 153, der beispielsweise als hydraulischer Antrieb oder Kugelgewindetrieb ausgebildet ist, im Gehäuse 158 in Längsrichtung des Schiebers 152 beweglich. Der Schieber 152 weist eine Schrägfläche 156 auf, die durch eine Einkerbung mit spitzem Winkel zur Längsrichtung des Schiebers 152 vorgesehen ist. Mit dieser Schrägfläche 156 befindet sich die Schrägfläche 157 einer Stützwaage 151 in Anlage.

Wie es Fig. 9 entnehmbar ist, weist die Stützwaage 151 ein Joch 154 auf, an dem die Schrägfläche 157 ausgebildet ist und das zwei Stifte 151a, 151b miteinander verbindet. Die Stifte können auch Bolzen oder andere Einrichtungen sein, deren Längsabmessung größer als deren Querabmessung ist, und verlaufen im wesentliche orthogonal zur Längsachse des Schiebers 152. Um eine Bewegung der Stifte in ihrer Längsrichtung abzusichern, ist im Gehäuse 158 eine Ausnehmung in der Größe des Jochs ausgebildet, wie es Fig. 9 zeigt. In diese Ausnehmung taucht das Joch bei einer Hubbewegung der Stifte ein.

In gleicher Weise wie die Stützwaage 151 sind weitere Stützwaagen 251, 351, 451, 551, 651, 751 am Umfang des Schiebers 152 angeordnet.

In der zurückgezogenen Position des Schiebers 152 stehen die Stifte mit minimaler Abmessung aus dem Gehäuse hervor. Erfolgt nun eine Linearbewegung des Schiebers 152 durch Betätigung des Linearantriebs 153, so wird durch die Schrägfläche 156 des Schiebers 152 eine Kraft orthogonal zur Längsachse des Schiebers auf die Schrägfläche 157 der Druckwaage 151 ausgeübt. Die Stifte 151a, 251a der Stützwaagen treten somit stärker aus der Lagerdeckelabstützeinrichtung heraus, wie es in Fig. 8 gezeigt ist. In diesem Zustand befinden sich die Stifte jedoch noch nicht mit den Lagerdeckeln 191, 192 in Anlage. Erst bei Beginn des Bruchvorgangs stützen sich zu Beginn nur die einen Abschnitte der Lagerdeckel 191, 192, die Cracken unterzogen wurden, und dann später auch die anderen Abschnitte der Lagedeckel 191, 192, die anschließend durch Cracken abgetrennt wurden, an den Stützwaagen ab.

Auf diese Weise lassen sich in einem Arbeitsgang mehrere oder große Lagerdeckel gezielt wegcracken. Neben dem geringen vorrichtungstechnischen Aufwand hat eine solche Vorrichtung auch den Vorteil, daß das Wegcracken mit einem hohen Maß an Genauigkeit ausführbar ist.

Das bezüglich den Fig. 8 und 9 beschriebene Ausführungsbeispiel ist jedoch nicht nur auf Lagerdeckel anwendbar, die sich unterhalb des Lagerbetts befinden. Durch eine solche Anordnung der Lagerdeckelabstützeinrichtung, daß die freien Stirnflächen der Stifte 151a, 251a in Fig. 8 nach unten weisen, wird auch der Fall abgedeckt, daß sich die Lagerdeckel oberhalb des Lagerbetts befinden. In diesem Fall ist jedoch Sorge zu tragen, daß das jeweilige Joch nicht aus der entsprechenden Ausnehmung im Gehäuse 158 herausfällt. Dieses kann durch entsprechende Vorsprünge an den Stützwaagen, vorzugsweise an den Stiften, sichergestellt werden.

Zum besseren Verständnis sei im folgenden kurz die Funktion der erfindungsgemäßen Bearbeitungseinheit beschrieben.

Zu Beginn des Bearbeitungszyklusses wird ein Pleuel 2 auf die in Figur 1 dargestellte äußere Kassette 6 aufgelegt. Durch die Transporteinheit 4 (z. B. Rundtisch) wird das Pleuel 2 in seine Bearbeitungsposition mit Bezug zur Lasereinheit 10 ausgerichtet . Über diese Lasereinheit 10 werden die beiden die Bruchebene vorgebenden Kerben in die Umfangswandung des Lagerauges 86 des Pleuels 2 eingearbeitet. Prinzipiell vorstellbar ist es auch, daß die Kerben auf herkömmliche Weise, beispielsweise durch Räumen ausgebildet werden.

Bei einer weiteren Drehung des Rundtisches wird das Pleuel 2 in die in Figur 1 dargestellte Relativpostion zur Crackeinheit 12 gebracht. Anschließend wird der Zylinder 18 betätigt, so daß der Horizontalanschlag 22 in seine Anschlagposition gefahren wird. Gleichzeitig wird durch Ansteuern des Betätigungszylinders 30 die gesamte Crackeinheit 12 abgesenkt, so daß der Spreizdorn 14 in das große Lagerauge 86 eintaucht.

Durch Ansteuerung der Steuerung 80 wird dann der Spreizzylinder 38 ausgefahren, so daß der Spreizkeil 36 nach unten bewegt und der bewegliche Spreizbacken 34 in der Darstellung nach Figur 2 nach rechts bewegt wird. Gleichzeitig werden die Düsen angesteuert, so daß die Druckluft während des Crackvorganges in den Bruchebenenbereich eingeblasen wird. Das heißt, Bruchtrennen und Ausblasen erfolgen gleichzeitig oder zumindest unmittelbar nacheinander.

Bei dem gezeigten Ausführungsbeispiel wird praktisch die Pleuelstange 52 mit dem Lagerbett abgetrennt, so daß diese Bauteile mit dem kleinen Auge 50 in der Darstellung nach Figur 2 nach rechts ausweichen. Diese Ausweichbewegung wird durch die federvorgespannte Führung des Führungszapfens 54 ermöglicht. Der Horizontalanschlag 22 fährt nach unten und gibt den Raum frei für die anschließende Schrauboperation.

Nach dem Bruchtrennen des Pleuels 2 wird die Schraubeinheit 24 bei eingetauchtem Spreizdorn 14 entlang der Nulllagenlinie 76 in ihre Wirkposition gebracht und die Spannschrauben eingeschraubt. Dabei kann die Steuerung 80 in Abhängigkeit von Schraubwinkel oder vom Drehmoment die Schraubstation 24 den Spreizdorn 14 derart steuern, daß die Pleuelteile während des Füge-/Setzvorgangs geführt sind und eine präzise Lagepositionierung ermöglicht ist.

Bei einer einfacheren Variante der Erfindung kann der Spreizdorn 14 vor dem Einschrauben der Spannschrauben zurückgezogen werden, so daß diese Führung andere externe Bauelemente übernehmen müssen. Wesentlich ist jedoch, daß das Cracken und die Verschraubung an einer einzigen Station ohne Lageveränderung des Pleuels 2 erfolgt.

Die Betätigung des Spreizdorns 14 während des Schraubvorgangs muß nicht zwangsweise über den Spreizkeil 36 erfolgen, sondern es können auch andere geeignete Bauelemente zur Radialbewegung des beweglichen Spreizbackens verwendet werden. Die Betätigung kann bspw. über einen Zylinder erfolgen, der auf den beweglichen Spreizbacken wirkt.

Nach dem Füge-/Setzvorgang durch Anziehen der Schrauben, das beispielsweise drehmoment-, drehwinkel- oder steckgrenzengesteuert erfolgen kann, werden die Spannschrauben wieder gelöst und eventuell noch vorhandene Bruchteile durch Ansteuerung der Düsen ausgeblasen. Anschließend werden die Spannschrauben nach Vorschrift des Herstellers angezogen und das Pleuel zum nächsten Fertigungsschritt, beispielsweise der Feinbearbeitung oder dem Einsetzen von Buchsen transportiert.

Durch die erfindungsgemäße Ausgestaltung der Bearbeitungseinheit kann die Präzision des Füge-/Setzvorgangs erheblich verbessert werden, da zwischen Cracken und Schrauben kein Transportschritt vorgesehen ist. Ein weiterer Vorteil der erfindungsgemäßen Einheit besteht darin, daß sämtliche zum Bruchtrennen erforderlichen Arbeitsvorgänge (Laserkerben, Bruchtrennen, Ausblasen, Fügen/Setzen) auf kleinstem Raum mit einer einzigen kompakten Einheit durchgeführt werden können, die darüber hinaus noch durch einfaches Wechseln von Wechselteilen sehr schnell auf unterschiedliche Bauteilgeometrien umrüstbar ist, so daß diese Einheit auch für Kleinserien geeignet sein dürfte.

Bei den vorgehend beschriebenen Ausführungsformen ist die Schraubeinheit 24 so am Gestell der Bearbeitungseinheit 1 befestigt, daß ihre Wirklinie mit der Nulllage 76 (Mittelebene) des Pleuels 2 übereinstimmt.

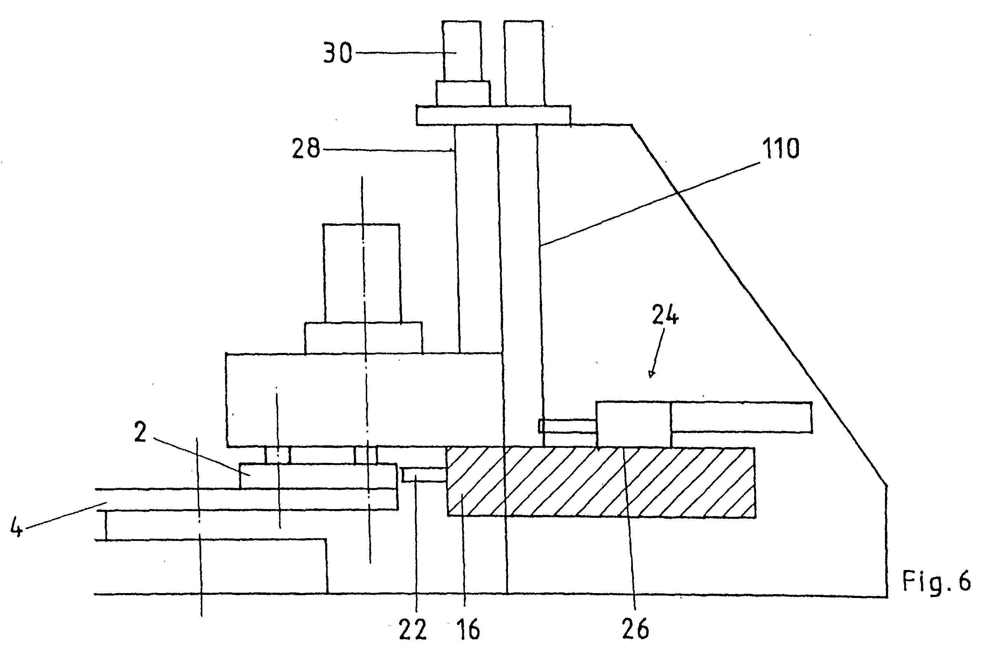

In Figur 6 ist schematisch ein Ausführungsbeispiel dargestellt, bei dem die Schraubeinheit 24 und der Gegenhalter 16 mit dem Horizontalanschlag 22 auf einer zusätzlichen Vertikalachse 110 geführt sind. Das heißt, bei diesem Ausführungsbeispiel ist die Schraubeinheit 24 in Höhenrichtung des Werkzeugstücks 2 verstellbar, so daß die vorbeschriebene Nullpunktfixierung entfällt. Diese Ausgestaltung ermöglicht es, den Gegenhalter 16 und die Schraubeinheit 24 auf einfache Weise in der Höhe an die Werkstückgeometrie 2 anzupassen, so daß die Rüstzeiten weiter verringert werden können.

Bei dem eingangs beschriebenen Ausführungsbeispiel wurden Hydraulik- oder Pneumatikzylinder zur Verstellung verwendet. Selbstverständlich können auch NC-Achsen mit entsprechenden Stellmotoren eingesetzt werden, um den Vertikal- und Horizontalvorschub der Crackeinheit 12, der Schraubeinheit 24 und des Horizontalanschlags 22 zu bewirken.

In einer weiteren Ausbaustufe der Einrichtung ist vorgesehen, die Prozeßgrößen wie z. B. Wege und Kräfte zu erfassen und so zu bewerten, daß eine gezielte Prozeßführung ermöglicht wird. Beispielsweise wird in einer interessanten Variante der Einrichtung das Crackgeräusch erfaßt und zur Beendigung der Crackbewegung verwendet.

Bei dem Ausführungsbeispiel in Figur 6 ist die Schraubeinheit 24 ähnlich wie beim vorbeschriebenen Ausführungsbeispiel entlang einer Horizontalführung 26 verschiebbar, um in ihre Eingriffsposition am Werkstück 2 zu gelangen.

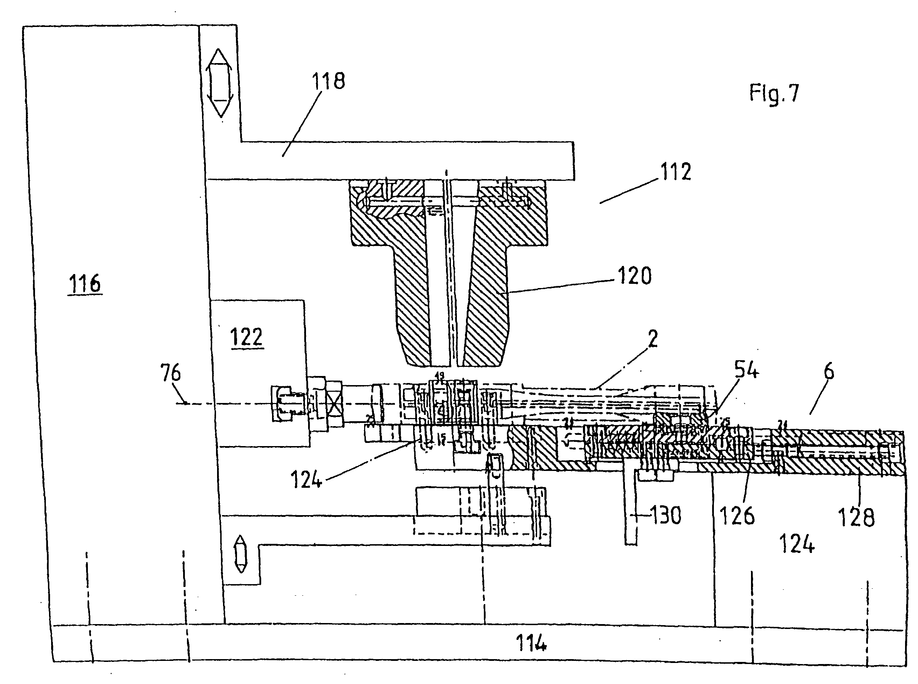

Die Rüstzeiten bei der Umstellung der Bearbeitungseinheit auf andere Werkstückgeometrien lassen sich weiter minimieren, wenn eine Rüstvorrichtung 112 gemäß Figur 7 eingesetzt wird.

Über diese Rüstvorrichtung 112 lassen sich die Wechselteile einer Kassette 6 außerhalb der Bearbeitungseinheit 1 vorjustieren, so daß die tatsächliche Umrüstung und damit die Stillstandszeit der Bearbeitungseinheit 1 auf ein Minimum reduziert ist.

Die in Figur 7 dargestellte Rüstvorrichtung 112 hat eine Basisplatte 114, auf der eine Führung 116 befestigt ist. Diese trägt einen Befestigungsschenkel 118 für einen Spreizkegel 120, dessen Geometrie derjenigen des Spreizdorns 14 der Bearbeitungseinheit 1 entspricht. Der Befestigungsschenkel 118 ist in Vertikalrichtung entlang der Führung 116 verschiebbar.

An der Führung 116 ist des weiteren ein Gegenhalter 122 befestigt, der in Anlage an die Stirnseite des Pleuels 2 oder eines anderen Werkstückes bringbar ist. Die Kassette 6 mit den Wechselteilen ist auf einen Stützbock 124 befestigt.

Auf einem an der Führung 115 geführten Befestigungsschenkel 122 ist ein Halter für Zentrierstifte 124 gelagert. Der Schenkel 122 hat außerdem eine (z. B. eingravierte) Referenzlinie, die den Laserstrahl simuliert. Dadurch kann mit einem Meisterpleuel mit Anriß der Kerb-Sollposition die korrekte Einstellung der Pleuelzentrierung kontrolliert und ggf. korrigiert werden.

Die rückwärtige, pleuelstangenseitige Zentrierung des kleinen Lagerauges übernimmt der Fixierzapfen 54. Dieser ist auf einem Schiebestück 126 befestigt, das im Grundkörper 128 verschiebbar geführt ist, und mit einer Feder in eine Grundstellung vorgespannt ist. Zur Handbetätigung des Schiebestücks 126 ist ein Betätigungsschenkel 130 vorgesehen, der nach unten aus dem Grundkörper 128 heraussteht. Die Anpassung der Wechselkassetten 6 an unterschiedliche Pleuelgeometrien erfolgt im wesentlichen durch Austausch des Führungszapfens 54 mit dem Schiebestück 126 und der Zentrierstifte 124 mit dem dazugehörigen Aufnahmekörper. Eine Veränderung der Nulllagenposition 76 könnte gegebenenfalls noch durch Distanzteile (nicht dargestellt) durchgeführt werden, die der Kassette 6 untergelegt sind.

Die korrekte Einstellung der Kassette wird überprüft, indem der Spreizkegel 120 bei justierter Kassette 6 in der Darstellung nach Figur 7 nach unten gefahren wird, wobei dieser kollisionsfrei in das große Auge eintauchen sollte.

Offenbart sind ein Verfahren zur Ausbildung eines geteilten Lagers eines Bauteils und eine Bearbeitungseinheit zur Durchführung dieses Verfahrens, bei denen das Bruchtrennen, Ausblasen und Verschrauben eines Lagerdeckels mit einem Lagerbett ohne Lageänderung des Pleuels erfolgt.

## Patentansprüche

1. Verfahren zur Ausbildung eines geteilten Lagers eines Bauteils (2), das mittels eines Bruchtrennvorganges in einen Lagerdeckel (90) und ein bauteilseitiges Lagerbett (88) getrennt wird und nach dem Ausblasen von losen Bruchstücken gefügt wird, wobei das Bruchtrennen mittels eines Spreizdornes (14) durchgeführt wird, und das Verschrauben derart erfolgt, dass in der Bruchebene ein vorbestimmter Fügezustand erreicht wird, **dadurch gekennzeichnet, dass** das Bruchtrennen, Ausblasen und Verschrauben an einer gemeinsamen Station und ohne wesentliche Lageveränderungen des Bauteils (2) erfolgt, und der Spreizdom (14) auch zur Lagefixierung während des Ausblas- und Fügevorganges verwendet wird.

2. Verfahren nach Patentanspruch 1, **dadurch gekennzeichnet, daß** das Ausblasen auch während des Bruchtrennens oder unmittelbar daran anschließend durchgeführt wird.

3. Verfahren nach einem der vorhergehenden Patentansprüche, **dadurch gekennzeichnet, daß** während des Fügens eine der Fügekraft entgegenwirkende Spreizkraft auf den Lagerdeckel (90) und das Lagerbett (88) aufgebracht werden kann.

4. Bearbeitungseinheit, insbesondere zur Durchführung des Verfahrens nach einem der vorhergehenden Patentansprüche, mit einem Spreizdorn (14), der zum Bruchtrennen in eine Lagerbohrung (48) eines Bauteils (2) einbringbar ist und mit einer Spannauflage (6) für das Bauteil (2), mit einer Blaseinrichtung (60, 62; 72, 74) und einer Schraubeinheit (24), wobei das Bruchtrennen mittels des Spreizdornes (14) durchführbar ist, **dadurch gekennzeichnet, dass** die Blaseinrichtung und die Schraubeinheit in der Bruchtrennstation in Wirkeingriff mit dem Bauteil (2) bringbar sind, und der Spreizdorn auch zur Lagefixierung während eines Ausblas- und Fügevorganges verwendbar ist.

5. Bearbeitungseinheit nach Patentanspruches 4, **dadurch gekennzeichnet, daß** die Blaseinrichtung zumindest eine Düse (64, 66; 72, 74) hat, die im Spreizdorn (14) im Bereich der Trennebene des Bauteils (2) mündet.

6. Bearbeitungseinheit nach Patentanspruch 5, **dadurch gekennzeichnet, daß** die Düse (64, 66; 72, 74) in einem Spreizkeil (36) des Spreizdorns (14) ausgebildet ist.

7. Bearbeitungseinheit nach einem der Patentansprüche 4 bis 6, **dadurch gekennzeichnet, daß** die Mittelebene des Bauteils eine feste Bezugsebene (76) des Spreizdorns (14), der Schraubeinheit (24) der Blaseinrichtung (60, 62; 64, 66; 72, 74) und einer Gegenhalteeinrichtung (Stützwaage) enthält.

8. Bearbeitungseinheit nach einem der Patentansprüche 4 bis 6, **dadurch gekennzeichnet, daß** die Schraubeinheit (24) und gegebenenfalls eine Gegenhalteeinrichung auf einer Achsparallel zur Lagerbohrung angeordneten Führung verfahrbar ist.

9. Bearbeitungseinheit nach einem der Patentansprüche 4 bis 8, **gekennzeichnet durch** eine Steuereinrichtung (80), über die der Spreizdorn (14) während des Bruchtrennens - und/oder Schraubvorganges in Anlage an Lagerbett (88) und Lagerdeckel (90) haltbar ist.

10. Bearbeitungseinheit nach Patentanspruch 9, **dadurch gekennzeichnet, daß** die Steuereinrichtung (80) in Abhängigkeit von der Relativlage der Lagerteile (88, 90) oder vom Anzugsmoment, oder Schraubwinkel der Schraubeinheit (24) ansteuerbar ist.

11. Bearbeitungseinheit nach Patentanspruch 9 oder 10, **dadurch gekennzeichnet, daß** die Steuereinrichtung (80) einen Zylinder oder einen elektromagnetischen Antrieb hat, über den der Spreizdorn (14) in Anlage an die Lagerteile (88, 90) bringbar ist.

12. Bearbeitungseinheit nach einem der Patentansprüche 4 bis 11, bei der der Lagerdeckel (90) und/oder das das Lagerbrett enthaltende Werkstückteil während des Bruchtrennens abgestützt ist, **gekennzeichnet durch** eine Stützwaage (96) mit zwei Auflageflächen (98, 100) über die der Lagerdeckel (90) bzw. das Werkstückteil mit einer vorbestimmten Kraft (F) beaufschlagbar ist und die zu Beginn des Bruchtrennvorgangs in einem vorbestimmten Abstand zum Lagerdeckel (90) angeordnet sind, wobei die zweite Werkstückhälfte in ähnlicher Art ebenfalls über eine Stützwaage oder eine Stützbrücke so abgestützt wird, daß **durch** einen vorbestimmten Abstand zum Werkstück eine Minimierung des Biegebruchanteiles beim Zweitbruch erreicht wird.

13. Bearbeitungseinheit nach Patentanspruch 12, **dadurch gekennzeichnet, daß** die Stützwaagen beiderseits jeweils mit den Spreizdornhälften - fest oder federnd - verbunden sind.

14. Bearbeitungseinheit nach einem der Patentansprüche 4 bis 13, **gekennzeichnet durch** die Kombination mit einer vorgeschalteten Lasereinheit zum Einbringen von Kerben.

15. Bearbeitungseinheit nach einem der Patentansprüche 4 bis 14, **dadurch gekennzeichnet, daß** das Werkstück (2) auf einer Kassette (6) angeordnet ist, die vorzugsweise an unterschiedliche Werkstückgeometrien anpassbar ist.

16. Bearbeitungseinheit nach Anspruch 12 mit zumindest einer weiteren Stützwaage (151), wobei die Stützwaagen (151, 251) über einen Schieber (152) mit der vorbestimmten Kraft beaufschlagbar sind.

17. Bearbeitungseinheit nach Anspruch 16, wobei durch die Stützwaagen (151, 251) zumindest zwei Lagedeckel gestützt werden.

18. Bearbeitungseinheit nach Anspruch 16 oder 17, wobei jede Stützwaage (151) zumindest einen Stift (151a) aufweist, dessen Längsachse zur Bewegungsrichtung des Schiebers (152) orthogonal verläuft.

19. Bearbeitungseinheit nach Anspruch 18, wobei jede Stützwaage (151) zwei Stifte (151a, 151b) aufweist, die über ein Joch (154) miteinander verbunden sind.

20. Bearbeitungseinheit nach Anspruch 18 oder 19, wobei die Kraftübertragung zwischen dem Schieber (152) und der Stützwaage (151) über Schrägflächen (156, 157) des Schiebers und der Stützwaage (151) erfolgt, die sich miteinander in Anlage befinden, wobei die Schrägfläche des Schiebers (152) zur Bewegungsachse des Schiebers (152) in spitzem Winkel verläuft.

## Claims

1. Method for forming a divided bearing for a component (2) which is separated into a bearing cap (90) and a component-side bearing base (88) by a fracture separation process and is assembled after loose fragments have been blown out, fracture separation being effected by an expanding arbor (14) and screwing being carried out in such a way that a predetermined assembly state is achieved in the fracture plane, **characterised in that** fracture separation, blow-out and screwing take place at a common station and without substantial changes in the position of the component (2), the expanding arbor (14) also being used for fixing in position during the blowing out and assembly process.

2. Method according to claim 1, **characterised in that** the blow-out is also carried out during fracture separation or immediately thereafter.

3. Method according to either of the preceding claims, **characterised in that** an expanding force counteracting the assembly force may be applied to the bearing cap (90) and the bearing base (88) during assembly.

4. Machine unit, in particular for carrying out the method according to any of the preceding claims, comprising an expanding arbor (14) which may be introduced into a bearing bore (48) of a component (2) for fracture separation and comprising a gripping support (6) for the component (2), with a blowing device (60, 62; 72, 74) and a screwing unit (24), wherein fracture separation may be carried out by the expanding arbor (14), **characterised in that** the blowing device and the screwing unit may be brought into engagement with the component (2) in the fracture separation station and the expanding arbor may also be used for fixing in position during a blowing out and assembly process.

5. Machining unit according to claim 4, **characterised in that** the blowing device has at least one nozzle (64, 66; 72, 74) which opens in the expanding arbor (14) in the region of the parting plane of the component (2).

6. Machining unit according to claim 5, **characterised in that** the nozzle (64, 66; 72, 74) is formed in an expanding wedge (36) of the expanding arbor (14).

7. Machining unit according to any of claims 4 to 6, **characterised in that** the centre plane of the component contains a fixed reference plane (76) of the expanding arbor (14), the screwing unit (24) of the blowing device (60, 62; 64, 66; 72, 74) and a counter-holding device (support balance).

8. Machining unit according to any of claims 4 to 6, **characterised in that** the screwing unit (24) and optionally a counter-holding device is capable of travelling on a guide arranged parallel to the axis of the bearing bore.

9. Machining unit according to any of claims 4 to 8, **characterised by** a controller (80) by means of which the expanding arbor (14) may be kept in contact with the bearing base (88) and the bearing cap (90) during the fracture separation and/or screwing process.

10. Machining unit according to claim 9, **characterised in that** the controller (80) may be activated as a function of the relative position of the bearing parts (88, 90) or of the breakaway torque or screwing angle of the screwing unit (24).

11. Machining unit according to claim 9 or 10, **characterised in that** the controller (80) has a cylinder or an electromagnetic drive by means of which the expanding arbor (14) may be brought into contact with the bearing parts (88, 90).

12. Machining unit according to any of claims 4 to 11, in which the bearing cap (90) and/or the workpiece part containing the bearing board is supported during fracture separation, **characterised by** a support balance (96) with two support surfaces (98, 100) by means of which the bearing cap (90) or the workpiece part may be loaded with a predetermined force (F) and which are arranged at a predetermined distance from the bearing cap (90) at the beginning of the fracture separation process, the second workpiece half similarly also being supported by a support balance or a support bridge in such a way that the proportion of fracture by bending during the second fracture is minimised as a result of a predetermined distance from the workpiece.

13. Machining unit according to claim 12, **characterised in that** the support balances are each connected - rigidly or resiliently - on either side to the expanding arbor halves.

14. Machining unit according to any of claims 4 to 13, **characterised by** the combination with a preceding laser unit for introducing notches.

15. Machining unit according to any of claims 4 to 14, **characterised in that** the workpiece (2) is arranged on a cassette (6) which may preferably be adapted to different workpiece geometries.

16. Machining unit according to claim 12 with at least one further support balance (151), wherein the support balances (151, 251) may be loaded with the predetermined force by a slider (152).

17. Machining unit according to claim 16, wherein at least two bearing caps are supported by the support balances (151, 251).

18. Machining unit according to claim 16 or 17, wherein each support balance (151) comprises at least one pin (151a) of which the longitudinal axis extends orthogonally to the direction of movement of the slider (152).

19. Machining unit according to claim 18, wherein each support balance (151) comprises two pins (151a, 151b), which are connected to one another via a yoke (154).

20. Machining unit according to claim 18 or 19, wherein force is transmitted between the slider (152) and the support balance (151) via oblique faces (156, 157) of the slider and the support balance (151) which are in contact with one another, wherein the oblique face of the slider (152) extends at an acute angle to the movement axis of the slider (152).

## Revendications

1. Procédé de fabrication d'un palier scindé d'une pièce (2) qui, au moyen d'un processus de cracking, est divisé en un chapeau de palier (90) et un support de palier (88), du côté de la pièce, et est assemblé après l'élimination des fragments détachés par air comprimé, le cracking étant exécuté au moyen d'un mandrin extensible (14) et le vissage se déroulant de telle sorte que, sur le plan de rupture, un état d'assemblage prédéfini soit atteint, **caractérisé en ce que** le cracking, l'élimination des fragments par air comprimé et le vissage se déroulent sur une station commune et sans modifications notables de la position de la pièce (2) et le mandrin extensible (14) est également utilisé pour le maintien en positive pendant les processus d'élimination des fragments par air comprimé et d'assemblage.

2. Procédé selon la revendication 1, **caractérisé en ce que** l'élimination par air comprimé peut également être exécutée pendant le cracking ou immédiatement après.

3. Procédé selon l'une des revendications précédentes, **caractérisé en ce qu'**une force d'écartement, contrecarrant la force d'assemblage, peut être appliquée au chapeau de palier (90) et au support de palier (88) pendant l'assemblage.

4. Unité d'usinage, en particulier pour l'exécution du procédé selon l'une des revendications précédentes, munie d'un mandrin extensible (14) que l'on peut monter pour le cracking dans l'alésage de palier (48) d'une pièce (2) et d'un support de serrage (6) pour la pièce (2), avec un dispositif de soufflage (60, 62, 72, 74) et une unité de vissage (24), le cracking pouvant être effectué au moyen d'un mandrin extensible (14), **caractérisée en ce que** le dispositif de soufflage et l'unité de vissage, dans la station de cracking, peuvent être engrenés avec la pièce (2) et le mandrin extensible peut également être utilisé pour le maintien en position pendant des processus d'élimination des fragments par air comprimé et d'assemblage.

5. Unité d'usinage selon la revendication 4, **caractérisée en ce que** le dispositif de soufflage comprend au moins une buse (64, 66, 72, 74) qui débouche dans le mandrin extensible (14), sur le plan de séparation de la pièce (2).

6. Unité d'usinage selon la revendication 5, **caractérisée en ce que** la buse (64, 66, 72, 74) est logée dans une cale d'écartement (36) du mandrin extensible (14).

7. Unité d'usinage selon l'une des revendications 4 à 6, **caractérisée en ce que** le plan médian de la pièce comprend un plan de référence fixe (76) du mandrin extensible (14), de l'unité de vissage (24) du dispositif de soufflage (60, 62, 64, 66, 72, 74) et d'un dispositif de maintien (bascule d'appui).

8. Unité d'usinage selon l'une des revendications 4 à 6, **caractérisée en ce que** l'unité de vissage (24) et, le cas échéant, un dispositif de maintien peuvent être déplacés sur une glissière disposée de manière parallèle à l'axe par rapport à l'alésage de palier.

9. Unité d'usinage selon l'une des revendications 4 à 8, **caractérisée par** un dispositif de commande (80) par le biais duquel le mandrin extensible (14) peut être maintenu, pendant le cracking et/ou le processus de vissage, en contact avec le support de palier (88) et le chapeau de palier (90).

10. Unité d'usinage selon la revendication 9, **caractérisée en ce que** le dispositif de commande (80) peut être commandé en fonction de la position relative des parties de palier (88, 90) ou du couple de serrage ou de l'angle de vissage de l'unité de vissage (24).

11. Unité d'usinage selon la revendication 9 ou 10, **caractérisée en ce que** le dispositif de commande (80) comporte un cylindre ou un entraînement électromagnétique par le biais desquels le mandrin extensible (14) peut être mis en contact avec les parties de palier (88, 90).

12. Unité d'usinage selon l'une des revendications 4 à 11, dans laquelle le chapeau de palier (90) et/ou la partie de pièce à usiner comprenant le support de palier sont soutenus pendant le cracking, **caractérisée par** une bascule d'appui (96) comportant deux surfaces d'appui (98, 100) par le biais desquelles le chapeau de palier (90) ou la partie de pièce à usiner peuvent être déplacés au moyen d'une force prédéfinie (F) et qui sont disposées, au début du processus de cracking, à une distance prédéfinie du chapeau de palier (90), la deuxième moitié de la pièce à usiner étant, d'une manière similaire, également soutenue par une bascule d'appui ou un pont de soutènement de sorte que, au moyen d'une distance d'écartement prédéfinie par rapport à la pièce à usiner, on obtient une minimisation de la part de rupture à la flexion lors de la deuxième cassure.

13. Unité d'usinage selon la revendication 12, **caractérisée en ce que** les bascules d'appui sont chacune reliées, de par et d'autre, aux moitiés de mandrin extensible, de manière fixe ou élastique.

14. Unité d'usinage selon l'une des revendications 4 à 13, **caractérisée par** la combinaison d'une unité laser montée pour l'exécution d'entailles.

15. Unité d'usinage selon l'une des revendications 4 à 14, **caractérisée en ce que** la pièce à usiner (2) est disposée sur un caisson (6) que l'on peut, de préférence, adapter aux géométries différentes des pièces à usiner.

16. Unité d'usinage selon la revendication 12 avec au moins une autre bascule d'appui (151), les bascules d'appui (151, 251) pouvant être déplacées par le biais d'un coulisseau (152) au moyen de la force prédéfinie.

17. Unité d'usinage selon la revendication 16 dans laquelle au moins deux chapeaux de palier sont soutenus par les bascules d'appui (151, 251).

18. Unité d'usinage selon la revendication 16 ou 17 dans laquelle chaque bascule d'appui (151) comprend au moins une pointe (151a) dont l'axe longitudinal s'étend de manière orthogonale par rapport au sens de déplacement du coulisseau (152).

19. Unité d'usinage selon la revendication 18 dans laquelle chaque bascule d'appui (151) comprend deux pointes (151a, 151b) qui sont reliées par une travée (154).

20. Unité d'usinage selon la revendication 18 ou 19 dans laquelle la transmission de la force entre le coulisseau (152) et la bascule d'appui (151) se fait par le biais des surfaces obliques (156, 157) du coulisseau et de la bascule d'appui (151) en contact, la surface oblique du coulisseau (152) s'étendant dans l'angle au sommet par rapport à l'axe de déplacement du coulisseau (152).
